# EUROPÄISCHE PATENTSCHRIFT

(11) **EP 4 596 906 B1**
(45) Veröffentlichungstag und Bekanntmachung des Hinweises auf die Patenterteilung: **17.06.2026**
(21) Anmeldenummer: 24212381.8
(22) Anmeldetag: 12.11.2024
(51) Int. Cl.: F16B 37/08, A61B 90/00, F16B 35/04

(54) **SCHNELLSCHRAUBVERBINDUNG**
QUICK-SCREW CONNECTION
RACCORD À VIS RAPIDE

(30) Priorität: 30.01.2024 DE 102024102585
(43) Veröffentlichungstag der Anmeldung: 06.08.2025
(73) Patentinhaber: ulrich GmbH & Co. KG, 89081 Ulm (DE)
(72) Erfinder: Midderhoff, Stefan, 89075 Ulm (DE); Schröter, Martin, 89264 Weissenhorn (DE); Jan-Niklas, Rother, 88471 Laupheim (DE); Spleiss, Albert, 88433 Schemmerhofen (DE)
(74) Vertreter: Hentrich Patent- & Rechtsanwaltspartnerschaft mbB

(56) Entgegenhaltungen:
- EP-A1- 3 995 703
- EP-B1- 2 985 477
- DE-A1- 102009 021 597
- TW-B- I 815 369

## Beschreibung

Die Erfindung betrifft eine Schnellschraubverbindung mit einem ein Außengewinde aufweisenden Gewindebolzen und mit einem ein Innengewinde aufweisenden Mutterteil, wobei das Mutterteil ein Gewindestück aufweist, in dem das Innengewinde ausgebildet ist, und wobei um einen Winkel gegenüber einer Längsachse des Innengewindes verdreht eine Durchgangsbohrung durch das Gewindestück geführt ist, deren Durchmesser größer als der Außendurchmesser des Innengewindes und kleiner als der Außendurchmesser des Gewindestücks ist.

Gewindeverbindungen beziehungsweise Schraubverbindungen zweier ein Gewinde aufweisenden Bauteile sind weit verbreitete Lösungen, um zwei Gegenstände relativ zueinander verstellen und auch festlegen zu können. Die bei einer Verstellung der beiden Bauteile zurückgelegte Strecke S ergibt sich aus der Steigung P des Gewindes und der Anzahl der Umdrehungen U zu S = P x U.

Für große Strecken oder kleine Steigungen ist eine Vielzahl von Umdrehungen erforderlich, was den Zeitaufwand und Arbeitsaufwand erhöht. Dies ist besonders nachteilig bei zeitsensitiven Anwendungsfällen, wie beispielsweise in der Medizin und dort insbesondere bei Operationen, da ein erhöhter Zeitaufwand mit einer erhöhten Belastung des Patienten verbunden ist.

Aus dem Stand der Technik sind Lösungen bekannt, die eine schnellere Überbrückung großer Strecken ermöglichen. Die DE 198 25 132 A1 offenbart eine Schraubverbindung mit einem ein Bolzengewinde aufweisenden Gewindestab und einer Mutter. Der Gewindestab ist als Vierkant-Gewindestab mit ebenen Flächen ausgebildet, so dass das Bolzengewinde nur auf Gewindesegmenten ausgebildet ist. Die Mutter weist einen in einem spitzen Winkel zu dem Muttergewinde angebrachten Vierkant-Durchbruch auf, der das Muttergewinde in seine Eckbereichen unterbricht, um je nach Drehlage eine Verschiebbarkeit der Mutter gegenüber dem Gewindestab zu ermöglichen oder zu verhindern. Aus der DE 10 2017 129 644 A1 ist eine Schnellschraubverbindung bekannt, bei der eine Gewindestange mit einem Außengewinde und eine Mutter vorliegen. Sowohl das Außengewinde als auch das Muttergewinde ist an mindestens zwei gegenüberliegenden Längsseiten abgeflacht. Die Mutter ist weiterhin in ein erstes und zweites Mutterstück unterteilt, wobei das erste und das zweite Mutterstück über eine Außen-/Innengewindepaarung gegeneinander verdrehbar und verspannbar ist.

Die DE 10 2009 021 597 A1 offenbart bei einer Schnellspannmutter eine Schnellschraubverbindung mit den Merkmalen des Oberbegriffs von Anspruch 1.

Es ist die Aufgabe der vorliegenden Erfindung, eine einfach zu bedienende Schnellschraubverbindung bereit zu stellen, mit der bei höher Verlässlichkeit der Schraubverbindung bei einem Eingriff des Gewindes eine schnelle translatorische Verstellung zur Überbrückung der gewünschten Strecke ermöglicht ist.

Diese Aufgabe wird durch eine Schnellschraubverbindung mit den Merkmalen des Anspruchs 1 gelöst. Vorteilhafte Ausgestaltungen mit zweckmäßigen Weiterbildungen der Erfindung sind in den abhängigen Ansprüchen angegeben.

Dazu weist das Mutterteil ein Druckstück auf, das radial zu der Längsachse zwischen einer das Innengewinde im Eingriff mit dem Außengewinde sichernden Eingriffslage und einer das Innengewinde von dem Außengewinde lösenden Verstelllage verstellbar ist.

Die erfindungsgemäße Schnellschraubverbindung bietet die Funktionalität einer Gewindeverbindung und schafft weiterhin auch die Möglichkeit, durch das Verkippen des Gewindestücks die Gewindeverbindung frei zu stellen, durch eine rein translatorische Bewegung große Strecken schnell zurück zu legen und sodann durch erneutes Verkippen in die entgegen gesetzte Richtung wieder die Gewindeverbindung herzustellen und die erreichte Lage zu sichern. Eine Feineinstellung der axialen Lage des Gewindestücks auf dem Gewindebolzen kann dann wieder durch eine Verdrehung des Gewindestücks gegenüber dem Gewindebolzen erzielt werden. Das Einbringen der Durchgangsbohrung mit der gewählten, durch den Winkel bestimmten Orientierung und dem gezielt gewählten Durchmesser sichert dabei, dass auf einer Seite des Gewindestücks, nämlich auf der Seite, zu der die Durchgangsbohrung geneigt ist, die Gewindegänge vollständig ausgebohrt werden und dabei eine ausreichende Materialstärke des Gewindestücks verbleibt, während auf der gegenüberliegenden Seite die Gewindegänge mit ausreichender Gewindetiefe stehen bleiben. Das Vorhandensein des Druckstücks steigert dabei die Prozesssicherheit und die Verlässlichkeit der Schnellschraubverbindung, da orthogonal zu der Verstellrichtung eine Kraft ausgeübt werden muss, um eine Schnellverstellung zu ermöglichen.

Der Winkel stammt dabei aus einem Intervall von 2° bis 45° und vorzugsweise aus einem Intervall von 5° bis 35 und weiter vorzugsweise aus einem Intervall von 10° bis 25°.

Dabei kann das Druckstück von einer Rückstellfeder beaufschlagt sein, die das Druckstück in die Eingriffslage verstellt, also der Grundzustand ein gegebener Gewindeeingriff ist und aktiv eine Kraft ausgeübt werden muss, um die Gewindeverbindung zu beenden. Bei einem Wegfall der Kraft wird die Gewindeverbindung zwangsgesteuert wieder hergestellt. Die Feder kann dabei insbesondere auch durch eine Blattfeder gebildet sein, wobei aber auch Druckfedern, Zugfeder oder Spiralfedern prinzipiell geeignet sind.

Dazu kann das Druckstück eine erste Führungsfläche aufweisen, die in der Eingriffslage das Gewindestück beaufschlagt. Auch kann das Druckstück eine zweite Führungsfläche aufweisen, die in der Verstelllage das Gewindestück beaufschlagt. Durch diese Gestaltung wird die Bedienung vereinfacht und die Prozesssicherheit weiter gesteigert, wozu auch beträgt, wenn das Gewindestück auf der zu dem Druckstück weisenden Seite eine geneigt zu der Längsachse von außen nach innen verlaufende, zur Anlage an die erste Führungsfläche und die zweite Führungsfläche bestimmte dritte Führungsfläche aufweist.

Zur Vermeidung von Verkeilungen oder und Verkantungen können die erste Führungsfläche und die zweite Führungsfläche auf der zur Längsachse weisenden Seite gerundet ausgebildet sein.

Weiterhin ist besonders bevorzugt, wenn das Mutterteil ein ringförmiges Außenteil aufweist, das den Gewindebolzen umfasst und zwei einander gegenüberliegende Seitenlaschen aufweist, an denen das Druckstück gelagert ist. Durch das Außenteil wird dabei das Mutterteil verlässlich zusammen gehalten, weil das Gewindestück und das Druckstück dauerhaft zusammen gefasst sind.

Dazu kann an den Seitenlaschen jeweils ein erster Führungszapfen ausgebildet sein, auf denen das Druckstück in jeweils einem tangential zur Längsachse verlaufenden Langloch geführt ist, was eine axiale Sicherung bewirkt und zugleich eine radiale Führung sicherstellt.

Weiterhin kann senkrecht zu der Längsachse des Innengewindes eine Querbohrung das Gewindestück durchsetzen, mit der das Gewindestück auf radial nach innen weisenden zweiten Führungszapfen gelagert ist. Dies verbessert die Kontrolle der Kippbewegung des Gewindestücks relativ zu der Längsachse und verbessert den Zusammenhalt des Mutterteils.

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, solange diese Kombinationen unter den Wortlaut der beigefügten Ansprüche fallen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind. Weitere Vorteile, Merkmale und Einzelheiten der Erfindung ergeben sich aus den Ansprüchen, der nachfolgenden Beschreibung bevorzugter Ausführungsformen, sowie anhand der Zeichnung. Dabei zeigt:
- Figur 1: eine perspektivische Darstellung der schnell lösbaren Schnellschraubverbindung zwischen einem Gewindebolzen und einem Mutterteil,
- Fig. 2: einen Längsschnitt durch ein Gewindestück des Mutterteils,
- Fig. 3: einen Längsschnitt durch den Gewindebolzen und das Mutterteil, mit dem Gewindestück in der Eingriffslage im Eingriff in dem Gewinde des Gewindebolzens, und
- Fig. 4: eine der Figur 3 entsprechende Darstellung mit dem Gewindestück in der Verstelllage außer Eingriff mit dem Gewinde des Gewindebolzens.

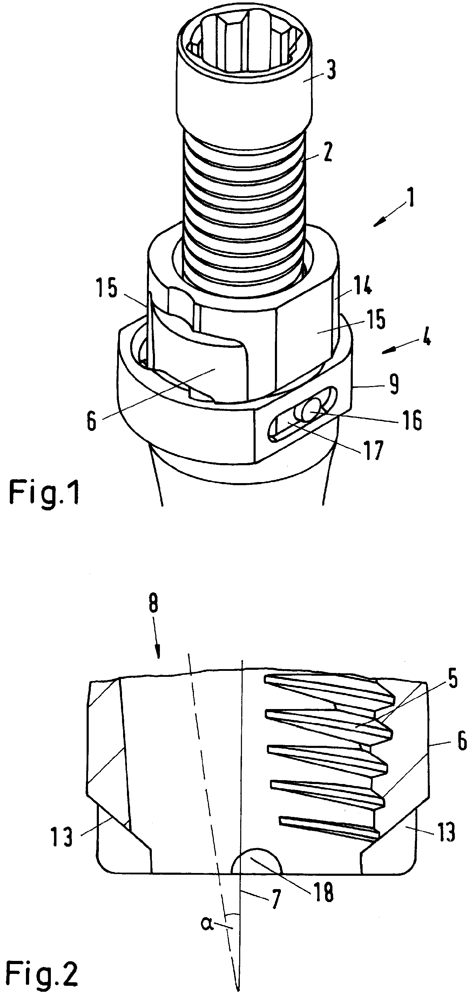

Figur 1 zeigt eine Schnellschraubverbindung 1, die aus einem ein Außengewinde 2 aufweisenden Gewindebolzen 3 und einem Mutterteil 4 gebildet ist, das ein Innengewinde 5 aufweist. Das Mutterteil 4 weist ein Gewindestück 6 auf, in dem das Innengewinde 5 ausgebildet ist. Die Figur 2 lässt weiterhin erkennen, dass um einen Winkel 2 gegenüber einer Längsachse 7 des Innengewindes 5 verdreht eine Durchgangsbohrung 8 durch das Gewindestück 6 geführt ist. Der Durchmesser der Durchgangsbohrung 8 ist dabei gezielt gewählt, nämlich größer als der Außendurchmesser des Innengewindes 5 und kleiner als der Außendurchmesser des Gewindestücks 6 ist, so dass auf der einen Seite, zu der die Durchgangsbohrung 8 geneigt ist, das Innengewinde 5 ausgebohrt ist und auf der gegenüberliegenden Seite das Innengewinde 5 in ausreichender Gewindetiefe verbleibt. Der Winkel α stammt dabei aus einem Intervall von 2° bis 45° und vorzugsweise aus einem Intervall von 5° bis 35 und weiter vorzugsweise aus einem Intervall von 10° bis 25°.

Die Figuren 1 sowie 3 und 4 verweisen darauf, dass das Mutterteil 4 weiterhin ein Druckstück 9 aufweist, das radial zu der Längsachse 7 zwischen einer das Innengewinde 5 im Eingriff mit dem Außengewinde 2 sichernden Eingriffslage und einer das Innengewinde 5 von dem Außengewinde 2 lösenden Verstelllage verstellbar ist. Dazu ist das Druckstück 9 von einer Rückstellfeder 10 beaufschlagt, die das Druckstück 9 in die Eingriffslage verstellt und diese damit sichert.

Das Druckstück 9 weist eine erste Führungsfläche 11 auf, die in der Eingriffslage das Gewindestück 6 beaufschlagt und eine zweite Führungsfläche 12, die in der Verstelllage das Gewindestück 6 beaufschlagt. Weiterhin weist das Gewindestück 6 auf der zu dem Druckstück 9 weisenden Seite eine geneigt zu der Längsachse 7 von außen nach innen verlaufende, zur Anlage an die erste Führungsfläche 11 und die zweite Führungsfläche 12 bestimmte dritte Führungsfläche 13 auf.

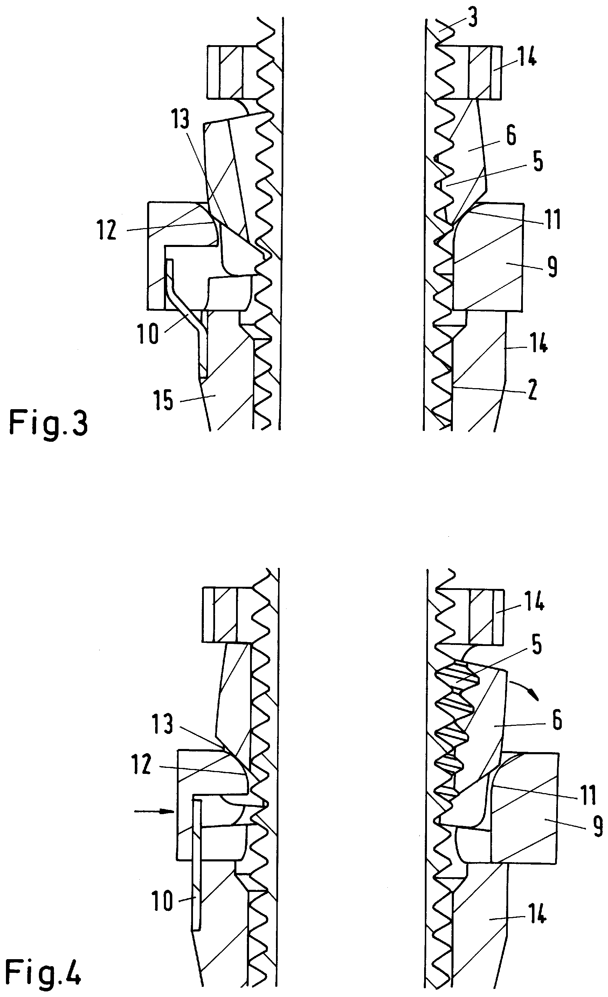

Die Figuren 3 und 4 insbesondere lassen dabei erkennen, dass die erste Führungsfläche 11 und die zweite Führungsfläche 12 auf der zur Längsachse weisenden Seite gerundet ausgebildet sind.

Das Mutterteil 4 weist weiterhin ein ringförmiges Außenteil 14 auf, das den Gewindebolzen 3 umfasst und zwei einander gegenüberliegende Seitenlaschen 15 aufweist, an denen das Druckstück 9 gelagert ist. Das Mutterteil 4 ist damit dreiteilig gebildet mit dem Außenteil 14, dem Gewindestück 6 und dem Druckstück 9. Der Zusammenhalt der drei Teile wird dabei erreicht, indem an den Seitenlaschen 15 jeweils ein erster Führungszapfen 16 ausgebildet ist, auf denen das Druckstück 9 in jeweils einem tangential zur Längsachse 7 verlaufenden Langloch 17 axial gesichert und radial geführt ist und weiterhin senkrecht zu der Längsachse 7 des Innengewindes 5 eine Querbohrung 18 das Gewindestück 6 durchsetzt, mit der das Gewindestück 6 auf radial nach innen weisenden zweiten Führungszapfen gelagert ist.

Wird in der Konfiguration der Figur 3 der Gewindebolzen 3 nach unten geschraubt, so entsteht eine Reaktionskraft, die nach oben zeigt und über den Formschluss auf das Außenteil 14 übertragen wird. Somit kann die Gewindeverbindung bei dieser Anwendung nicht gelöst werden. Weiterhin kann aber auch eine axiale Kraft nach unten auf den Gewindebolzen 3 ausgeübt werden, so dass das Gewindestück 6 nach unten mitgenommen wird und dadurch die Konfiguration aus Figur 4 erreicht wird, die eine Schnellverstellung ermöglicht. Wird hingegen eine axial nach oben wirkende Kraft auf den Gewindebolzen 3 ausgeübt, so wird die Lage des Gewindestücks 6 über den Verzahnungseingriff bewahrt und gesichert und ein Durchratschen des Gewindebolzens 3 nach oben in der in Figur 3 gezeigten Konfiguration ist blockiert

Die Konfiguration aus Figur 4 kann auch erreicht werden, indem gegen die Kraft der Rückstellfeder 10 das Druckstück 9 radial verstellt wird, wobei nach dem Loslassen der Rückstellfeder 10 die Konfiguration aus Figur 3 sich selbsttätig wieder einstellt.

### BEZUGSZEICHENLISTE:

- 1: Schnellschraubverbindung
- 2: Außengewinde
- 3: Gewindebolzen
- 4: Mutterteil
- 5: Innengewinde
- 6: Gewindestück
- 7: Längsachse
- 8: Durchgangsbohrung
- 9: Druckstück
- 10: Rückstellfeder
- 11: erste Führungsfläche
- 12: zweite Führungsfläche
- 13: dritte Führungsfläche
- 14: Außenteil
- 15: Seitenlaschen
- 16: erster Führungszapfen
- 17: Langloch
- 18: Querbohrung
- α: Winkel

## Patentansprüche

1. Schnellschraubverbindung (1) mit einem ein Außengewinde (2) aufweisenden Gewindebolzen (3) und mit einem ein Innengewinde (5) aufweisenden Mutterteil (4), wobei das Mutterteil ein Gewindestück (6) aufweist, in dem das Innengewinde (5) ausgebildet ist, und wobei um einen Winkel (α) gegenüber einer Längsachse (7) des Innengewindes (5) verdreht eine Durchgangsbohrung (8) durch das Gewindestück (6) geführt ist, deren Durchmesser größer als der Außendurchmesser des Innengewindes (5) und kleiner als der Außendurchmesser des Gewindestücks (6) ist, **dadurch gekennzeichnet, dass** das Mutterteil (4) ein Druckstück (9) aufweist, das radial zu der Längsachse (7) zwischen einer das Innengewinde (5) im Eingriff mit dem Außengewinde (2) sichernden Eingriffslage und einer das Innengewinde (5) von dem Außengewinde (2) lösenden Verstelllage verstellbar ist.

2. Schnellschraubverbindung (1) nach Anspruch 1, **dadurch gekennzeichnet, dass** der Winkel (α) aus einem Intervall von 2° bis 45° stammt und vorzugsweise aus einem Intervall von 5° bis 35 und weiter vorzugsweise aus einem Intervall von 10° bis 25°.

3. Schnellschraubverbindung (1) nach Anspruch 1 oder 2, **dadurch gekennzeichnet, dass** das Druckstück (9) von einer Rückstellfeder (10) beaufschlagt ist, die das Druckstück (9) in die Eingriffslage verstellt.

4. Schnellschraubverbindung (1) nach einem der Ansprüche 1 bis 3, **dadurch gekennzeichnet, dass** das Druckstück (9) eine erste Führungsfläche (11) aufweist, die in der Eingriffslage das Gewindestück (6) beaufschlagt.

5. Schnellschraubverbindung (1) nach einem der Ansprüche 1 bis 4, **dadurch gekennzeichnet, dass** das Druckstück (9) eine zweite Führungsfläche (12) aufweist, die in der Verstelllage das Gewindestück (6) beaufschlagt.

6. Schnellschraubverbindung (1) nach Anspruch 5, **dadurch gekennzeichnet, dass** das Gewindestück (6) auf der zu dem Druckstück (9) weisenden Seite eine geneigt zu der Längsachse (7) von außen nach innen verlaufende, zur Anlage an die erste Führungsfläche (11) und die zweite Führungsfläche (12) bestimmte dritte Führungsfläche (13) aufweist.

7. Schnellschraubverbindung (1) nach Anspruch 6, **dadurch gekennzeichnet, dass** die erste Führungsfläche (11) und die zweite Führungsfläche (12) auf der zur Längsachse (7) weisenden Seite gerundet ausgebildet sind.

8. Schnellschraubverbindung (1) nach einem der Ansprüche 1 bis 7, **dadurch gekennzeichnet, dass** das Mutterteil (4) ein ringförmiges Außenteil (14) aufweist, das den Gewindebolzen (3) umfasst und zwei einander gegenüberliegende Seitenlaschen (15) aufweist, an denen das Druckstück (9) gelagert ist.

9. Schnellschraubverbindung (1) nach Anspruch 8, **dadurch gekennzeichnet, dass** an den Seitenlaschen (14) jeweils ein erster Führungszapfen (16) ausgebildet ist, auf denen das Druckstück (9) in jeweils einem tangential zur Längsachse (7) verlaufenden Langloch (17) axial gesichert und radial geführt ist.

10. Schnellschraubverbindung (1) nach Anspruch 8 oder 9, **dadurch gekennzeichnet, dass** senkrecht zu der Längsachse (7) des Innengewindes (5) eine Querbohrung (18) das Gewindestück (6) durchsetzt, mit der das Gewindestück (6) auf radial nach innen weisenden zweiten Führungszapfen gelagert ist.

## Claims

1. Quick-release screw connection (1) comprising a threaded bolt (3) having an external thread (2) and a nut member (4) having an internal thread (5), wherein the nut member comprises a threaded insert (6) in which the internal thread (5) is formed, and wherein a through-bore (8) is formed through the threaded insert (6) at an angle (α) relative to a longitudinal axis (7) of the internal thread (5), the diameter of which through-bore is greater than the outer diameter of the internal thread (5) and smaller than the outer diameter of the threaded section (6), **characterized in that** the nut member (4) comprises a pressure piece (9) that is adjustable radially relative to the longitudinal axis (7) between an engagement position securing the internal thread (5) in engagement with the external thread (2) and an adjustment position releasing the internal thread (5) from the external thread (2).

2. Quick-release screw connection (1) according to claim 1, **characterized in that** the angle (α) is selected from an interval of 2° to 45°, preferably from an interval of 5° to 35°, and more preferably from an interval of 10° to 25°.

3. Quick-release screw connection (1) according to claim 1 or 2, **characterized in that** the pressure piece (9) is acted upon by a return spring (10) that moves the pressure piece (9) into the engagement position.

4. Quick-release screw connection (1) according to any one of claims 1 to 3, **characterized in that** the pressure piece (9) has a first guide surface (11) which acts on the threaded piece (6) in the engaged position.

5. Quick-release screw connection (1) according to any one of claims 1 to 4, **characterized in that** the pressure piece (9) has a second guide surface (12) which acts on the threaded piece (6) in the adjustment position.

6. Quick-release screw connection (1) according to claim 5, **characterized in that** the threaded member (6) comprises, on the side facing the pressure piece (9), a third guide surface (13) that extends from the outside to the inside at an angle to the longitudinal axis (7) and is intended to bear against the first guide surface (11) and the second guide surface (12).

7. Quick-release screw connection (1) according to claim 6, **characterized in that** the first guide surface (11) and the second guide surface (12) are rounded on the side facing the longitudinal axis (7).

8. Quick-release screw connection (1) according to any one of claims 1 to 7, **characterized in that** the nut member (4) comprises an annular outer part (14) that surrounds the threaded bolt (3) and has two opposing side tabs (15) on which the pressure piece (9) is mounted.

9. Quick-release screw connection (1) according to claim 8, **characterized in that** a first guide pin (16) is formed on each of the side tabs (14), on which the pressure piece (9) is axially secured and radially guided in a respective elongated hole (17) extending tangentially to the longitudinal axis (7).

10. Quick-screw connection (1) according to claim 8 or 9, **characterized in that** a transverse bore (18) extends through the threaded piece (6) perpendicular to the longitudinal axis (7) of the internal thread (5), by means of which the threaded piece (6) is mounted on second guide pins pointing radially inward.

## Revendications

1. Raccord à vis à démontage rapide (1) comprenant un boulon fileté (3) muni d'un filetage extérieur (2) et un élément d'écrou (4) muni d'un filetage intérieur (5), dans laquelle le élément d'écrou comprend un insert fileté (6) dans lequel est formé le filetage interne (5), et dans laquelle un alésage traversant (8) est formé à travers l'insert fileté (6) selon un angle (α) par rapport à un axe longitudinal (7) du filetage interne (5), le diamètre de ce trou traversant étant supérieur au diamètre extérieur du filetage interne (5) et inférieur à le diamètre extérieur de l'insert fileté (6), **caractérisé en ce que** l'élément d'écrou (4) comprend une pièce de pression (9) qui est réglable radialement par rapport à l'axe longitudinal (7) entre une position d'engagement maintenant le filetage interne (5) en prise avec le filetage externe (2) et une position de réglage libérant le filetage interne (5) du filetage externe (2) filetage externe (2).

2. Raccord à vis à dégagement rapide (1) selon la revendication 1, **caractérisé en ce que** l'angle (α) est choisi dans un intervalle de 2° à 45°, de préférence dans un intervalle de 5° à 35°, et plus préférablement dans un intervalle de 10°à 25°.

3. Raccord à vis à démontage rapide (1) selon la revendication 1 ou 2, **caractérisé en ce que** la pièce de pression (9) est sollicitée par un ressort de rappel (10) qui la déplace vers la position d'engagement.

4. Raccord à vis à dégagement rapide (1) selon l'une quelconque des revendications 1 à 3, **caractérisé en ce que** la pièce de pression (9) présente une première surface de guidage qui agit sur l'insert fileté (6) en position d'engagement.

5. Raccord à vis à démontage rapide (1) selon l'une quelconque des revendications 1 à 4, **caractérisé en ce que** la pièce de pression (9) comporte une deuxième surface de guidage qui agit sur l'insert fileté (6) en position de réglage.

6. Raccord à vis à démontage rapide (1) selon la revendication 5, **caractérisé en ce que** l'insert fileté (6) comporte, du côté tourné vers la pièce de pression (9), une troisième surface de guidage (13) qui s'étend de l'extérieur vers l'intérieur selon un angle par rapport à l'axe longitudinal (7) et qui est destinée à supporter contre la première surface de guidage (11) et la deuxième surface de guidage (12).

7. Raccord à vis à démontage rapide (1) selon la revendication 6, **caractérisé en ce que** la première surface de guidage (11) et la deuxième surface de guidage (12) sont arrondies du côté tourné vers l'axe longitudinal (7).

8. Raccord à vis à démontage rapide (1) selon l'une quelconque des revendications 1 à 7, **caractérisé en ce que** l'élément d'écrou (4) comprend une partie extérieure annulaire (14) qui entoure le boulon fileté (3) et comporte deux pattes latérales opposées (15) sur lesquelles est montée la pièce de pression (9).

9. Raccord à vis à dégagement rapide (1) selon la revendication 8, **caractérisé en ce qu'**une première broche de guidage (16) est formée sur chacune des pattes latérales (14), sur laquelle la pièce de pression (9) est fixée axialement et guidée radialement dans un trou oblong respectif (17) s'étendant tangentiellement à l'axe longitudinal axe (7).

10. Raccord à vis rapide (1) selon la revendication 8 ou 9, **caractérisé en ce qu'**un alésage transversal (18) s'étend à travers l'Insert fileté (6) perpendiculairement à l'axe longitudinal (7) du filetage intérieur (5), par grâce à laquelle l'insert fileté (6) est montée sur des deuxièmes broches de guidage orientées radialement vers l'intérieur.
